# EUROPEAN PATENT SPECIFICATION

(11) **EP 1 561 626 B1**
(45) Date of publication and mention of the grant of the patent: **03.11.2010**
(21) Application number: 05100615.3
(22) Date of filing: 31.01.2005
(51) Int. Cl.: F01N 3/20

(54) **Urea tank for a motor vehicle**
Harnstoffbehälter für Kraftfahrzeug
Réservoir d'urée pour véhicule automobile

(30) Priority: 06.02.2004 SE 4002424
(43) Date of publication of application: 10.08.2005
(73) Proprietor: Scania CV AB (publ), 151 87 Södertälje (SE)
(72) Inventor: Karlsson, Pär, 61165, Nyköping (SE)

(56) References cited:
- EP-A- 0 566 767
- DE-A1- 19 841 770
- DE-U1- 20 219 608
- US-A- 4 179 036

## Description

### TECHNICAL FIELD

The invention relates to a urea tank for a motor vehicle, comprising a container with an opening for the accommodation of fittings within the container, and a protected space for the fittings in the container.

### BACKGROUND

For the reduction of nitrogen oxide discharges from diesel engines by SCR (Selective Catalytic Reduction), urea dissolved in water is injected into the exhaust gases, whereby the nitrogen oxides are converted to nitrogen and water by means of a catalyst. The urea/water solution is stored in a separate tank in the vehicle. In the tank there is a set of fittings which may typically comprise, for handling the solution, elements in the form of a suction pipe, a return pipe, a heating coil and a level sensor. A problem with such a tank is that the fittings may suffer mechanical damage due to freezing of the urea/water solution in the tank, e.g. when braking of the vehicle imparts motion to a block of ice in the tank.

In the prior art DE 202 19 608U1 discloses a container having a safety device in the shape of one or more surge walls as a protection for the fittings to prevent damage on components located in the hollow space by a movement of frozen or semi frozen parts of the container contents.

### SUMMARY OF THE INVENTION

An object of the present invention is to provide an improved urea tank of the kind described herein before where in a simple manner all fittings can be protected in the interior of the container.

This is achieved by the features indicated in the claims set out below.

According to claim 1 of the invention, the protected space is provided by a tube accommodated in the opening of the container and firmly connected to the container, which tube encloses the fittings, is apertured and has lower edge regions extending into engagement with elevations of a bottom wall of the container, capable of securely fixing the tube laterally at the bottom wall.

It is thus in an easy way possible to create for the set of fittings a separate space protected by the tube so that blocks of ice large enough to be able to damage the fittings are reliably kept away from the fittings without making it difficult for solution in liquid phase to reach the fittings.

Other features and advantages of the invention are indicated by the following detailed description and by the claims.

### BRIEF DESCRIPTION OF THE DRAWINGS

FIG. 1 is a schematic side view of a urea tank according to the invention;
FIG. 2 is a cross-sectional view along the line 2-2 in FIG. I;
FIGS. 3A and 3B are sectional views on a larger scale with cutaway portions of upper and lower regions respectively of a urea tank according to the invention.

### DETAILED DESCRIPTION OF EMBODIMENTS

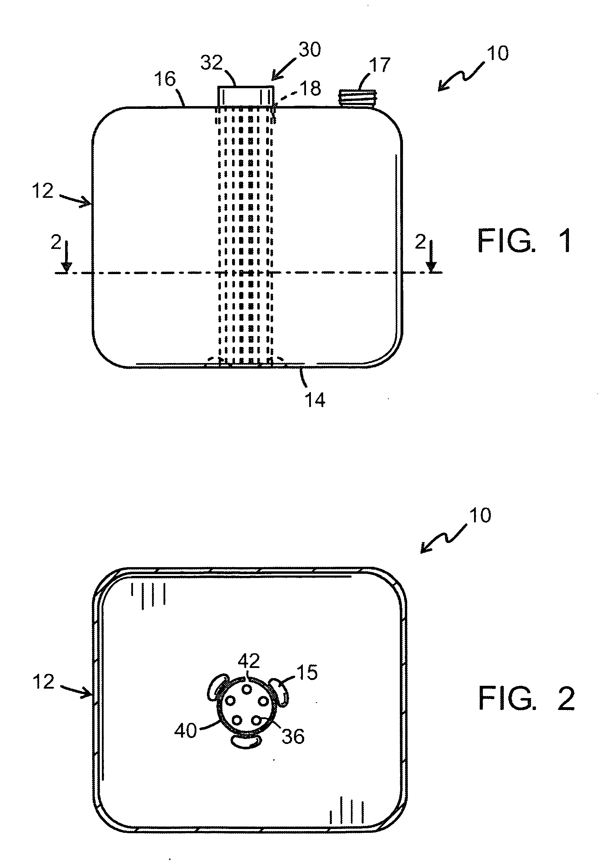

The urea tank 10 schematically depicted in FIG. 1 comprises a container 12 made of plastic material with a bottom wall 14 and a top wall 16. In the top wall 16 there is an opening 18 for the accommodation of a set of fittings 30. The container 12 further comprises a filling opening 17.

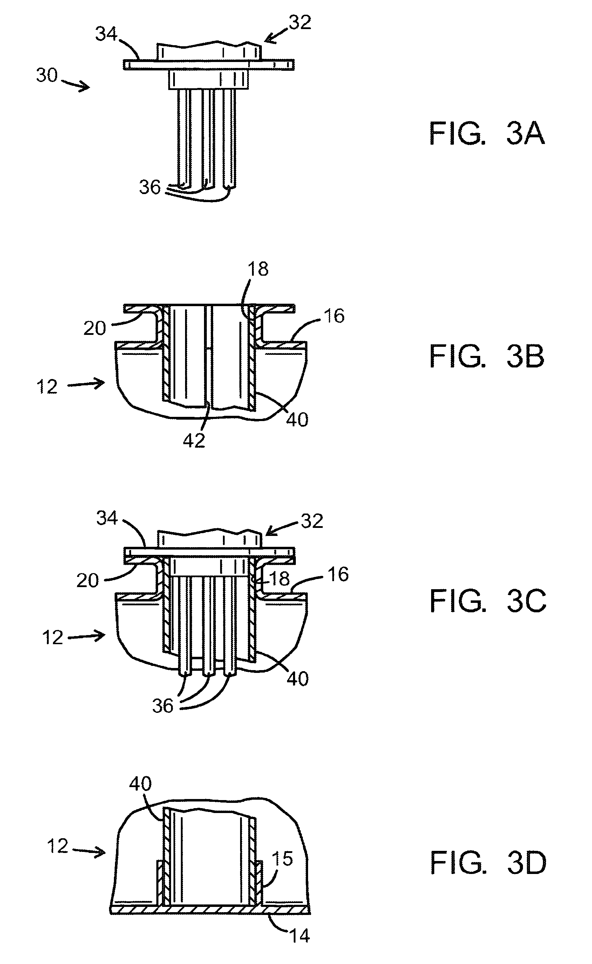

The set of fittings 30 comprises a head 32 arranged to be connected fluid-tightly to the opening 18 in the top wall 16. This may be achieved in many different ways, e.g. by a flange connection between a radial flange 20 (FIG. 3C) of the opening 18 and a radial flange 34 of the head 32. The head 32 may also take the form of a screw cap with internal or external threads adapted to engaging with complementary threads (not depicted) of the opening 18. A multiplicity of fittings 36 extend from the head 32 into the container 12. As previously mentioned, the fittings 36 may typically comprise a suction pipe for urea/water solution, a return pipe for unconsumed solution, a heating coil for thawing the solution when the latter is frozen by low ambient temperature, and a level sensor for the solution in the container.

According to the invention, the container 12 has arranged in it a protective housing 40 for the fittings 36 situated within the container. The housing is intended to protect the fittings 36 from harmful mechanical effects due to icing in the container 12, so that the fittings 36 are not affected by movements of ice in the container 12. The housing 40 therefore needs to be strong enough not to be ruptured or deformed, and needs to be so firmly anchored in the container 12 as not to be moved or dislodged by the action of ice.

According to the invention the housing 40 takes the form of a tube which is directed downwards from the opening 18 into the container 12.

In the embodiment depicted in FIGS. 3B-3D, the housing comprises a separate tube 40 made of suitable plastic material and inserted in a neck portion formed by the cylindrical opening 18 of the container 12. For the housing to be securely fixed in the container 12, it may be sufficient that it be long enough to engage with the bottom 14 of the container 12. For the tube 40 to be securely fixed laterally, the bottom 14 may be provided with a cylindrical collar 15 (FIG. 3D). The collar need not entirely surround the tube 40 but may be split into a number of elevations 15 which form segments extending round the tube 40 (FIG. 2). One or more elevations 15 may of course also be arranged on the inside (not depicted) of the tube 40.

To enable the urea/water solution in the container 12 to communicate freely with the inside of the tube 40, the latter is apertured, e.g. by a vertical slit 42 (FIG. 3B) extending along the whole height of the tube 40 in the container. The housing or the tube 40 may also be apertured in some other way, e.g. by perforations or by taking the form of a grid (not depicted).

## Claims

1. A urea tank for a motor vehicle, comprising a container (12) with an opening (18) for the accommodation of fittings (36) within the container, and a protected space for the fittings in the container, **characterised in that** the protected space is provided by a tube (40) accommodated in the opening (18) of the container (12) and firmly connected to the container (12), which tube encloses the fittings (36), is apertured and has lower edge regions extending into engagement with elevations (15) of a bottom wall (14) of the container (12) capable of securely fixing the tube laterally at the bottom wall.

2. The urea tank according to claim 1, whereby the tube (40) is apertured by a longitudinal slit (42).

## Patentansprüche

1. Harnstofftank für ein Kraftfahrzeug, umfassend einen Behälter (12) mit einer Öffnung (18) zum Aufnehmen von Anschlussteilen (36) innerhalb des Behälters und einen geschützten Raum für die Anschlussteile in dem Behälter,
**dadurch gekennzeichnet, dass** der geschützte Raum von einem Rohr (40) gebildet ist, das in der Öffnung (18) des Behälters (12) angeordnet und fest mit dem Behälter (12) verbunden ist, welches Rohr die Anschlussteile (36) umgibt, geöffnet ist und untere Randbereiche aufweist, die mit Vorsprüngen (15) einer Bodenwand (14) des Behälters (12) in Eingriff stehen, wobei diese dazu ausgebildet sind, das Rohr an der Bodenwand zu befestigen.

2. Harnstofftank nach Anspruch 1, wobei das Rohr (40) durch einen länglichen Schlitz (42) geöffnet ist.

## Revendications

1. Réservoir d'urée pour un véhicule à moteur, comprenant un conteneur (12) ayant une ouverture (18) permettant le logement d'accessoires (36) à l'intérieur du conteneur, et un espace protégé pour les accessoires à l'intérieur du conteneur, **caractérisé en ce que** l'espace protégé est formé par un tube (40) logé dans l'ouverture (18) du conteneur (12) et accouplé en liaison rigide au conteneur (12), lequel tube renferme les accessoires (36), est percé et présente des régions de bord inférieur s'étendant de façon à entrer en prise avec des parties en élévation (15) présentes sur la paroi de fond (14) du conteneur (12), capables d'assujettir solidement le tube dans la direction latérale par rapport à la paroi de fond.

2. Réservoir d'urée selon la revendication 1, dans lequel le tube (40) est percé d'une fente longitudinale (42).
